# EUROPEAN PATENT APPLICATION

(11) **EP 4 813 674 A1**
(43) Date of publication of application: **30.09.2026**
(21) Application number: 24894683.2
(22) Date of filing: 22.11.2024
(51) Int. Cl.: B60C 19/00, G10K 11/172

(54) **PNEUMATIC TIRE**

(30) Priority: 24.11.2023 KR 20230165920; 24.11.2023 KR 20230165921
(71) Applicant: HANKOOK TIRE & TECHNOLOGY CO., LTD, Gyeonggi-do 13494 (KR)
(72) Inventor: SEO, Byeong Ho, Daejeon 34127 (KR); LEE, Hyung Jae, Daejeon 34119 (KR)
(74) Representative: Stöckeler, Ferdinand
(86) International application number: PCT/KR2024/018615
(87) International publication number: WO 2025/110792

(57) **Abstract**

The present disclosure relates to a pneumatic tire for a vehicle, and more particularly, to a pneumatic tire including an efficient resonance noise reduction member. Accordingly, an embodiment provides a pneumatic tire including a tread portion 100, a sidewall portion 200, and a bead portion 300, wherein an inner liner layer 400 is installed inside the tire, and a plurality of resonance noise reduction members 500 are installed at equal intervals on the inner liner layer 400.

## Description

### TECHNICAL FIELD

The present disclosure relates to a pneumatic tire for a vehicle, and more particularly, to a pneumatic tire including a structure reducing tire resonance noise.

### BACKGROUND ART

Noise generated while driving a vehicle is an important factor determining a comfortable environment for a driver. The contribution of a noise source largely includes wind noise, engine noise, road noise, and tire noise, and may be classified by frequency (Hz). Recently, as a trend moves from an internal combustion engine vehicle to an electric vehicle, noise having not been a major problem in the internal combustion engine vehicle is causing inconvenience to the driver. The most representative noise is a resonance noise generated from a tire.

Tire resonance noise occurs as a sharp peak at approximately 200 Hz, and just like a resonating sound of "boing" when bouncing a basketball on the floor, a noise having a natural frequency generated in a cavity between the tire and a rim occurs as the tire continuously collides with the ground.

Currently, a commercialized technology for reducing tire resonance noise is to attach a strip-shaped sound-absorbing porous foam in a circumferential direction inside the tire. Generally, a method of attaching a single long strip shape to an inner liner inside the tire is used, and in some cases, the foam is divided into multiple pieces and attached along an inner circumferential direction of the tire.

The present disclosure aims to overcome disadvantages of the commercialized method for reducing tire resonance noise and to provide an efficient resonance noise reduction technology with a small amount.

Hereinafter, related prior art documents will be examined. Identification codes in the following prior art documents are irrelevant to the present disclosure.
Korean Patent No. 10-1775797 "Tire resonance noise reduction member fixing structure having resonance noise reduction member fixing band and tire manufactured by including the same" relates to a tire resonance noise reduction member fixing structure attaching and fixing a resonance noise reduction member to a tire and a manufacturing method thereof, and more particularly, provides a technology on a tire resonance noise reduction member fixing structure including a plurality of resonance noise reduction member fixing bands each including a resonance noise reduction member for reducing noise generated inside the tire, a coupling portion made of an elastic material and coupled to an inner surface of the tire, and a pressing portion closely attaching the resonance noise reduction member to an inner liner of the tire and maintaining a closely attached state, having advantages of applying a downward pressure to an upper surface of the resonance noise reduction member while the pressing portion extends and contracts, facilitating a resonance noise reduction member attachment process since a separate adhesive layer is not applied, and securely attaching and fixing the resonance noise reduction member to the inner surface of the tire without damaging the tire. However, the above technology has a problem of residual vibration occurring during pressing and contracting.
Korean Patent Application Publication No. 10-2021-0022383 "Tire including sealant layer and resonance noise reduction member layer" relates to a tire including a sealant layer and a resonance noise reduction member layer, and more particularly, relates to a tire including a resonance noise reduction member layer attached to an inner surface of the tire, and a sealant layer being disposed between the inner surface of the tire and the resonance noise reduction member layer and including a sealant attaching the resonance noise reduction member layer to the inner surface of the tire, the resonance noise reduction member layer including a nonwoven fabric. However, the above technology has a disadvantage that installation of the resonance noise reduction member layer is not easy.
Korean Patent No. 10-1775797 "Tire resonance noise reduction member fixing structure having resonance noise reduction member fixing band and tire manufactured by including the same" (Registered on Aug. 31, 2017)
Korean Patent Application Publication No. 10-2021-0022383 "Tire including sealant layer and resonance noise reduction member layer" (Published on Mar. 03, 2021)

### Detailed Description of the Invention

### Technical Problem

A conventional commercialized method uses a polyurethane foam, being a typical sound-absorbing material, and attaches the polyurethane foam in a circumferential shape inside the tire. Using this method may reduce a resonance noise generated in a cavity inside the tire, but requires a large volume of resonance noise reduction members, thereby requiring a large amount of adhesive (about 150 g to 300 g of the resonance noise reduction member per tire, and ~ g when using a glue type adhesive). Using a large volume of the resonance noise reduction members and the adhesive not only causes an increase in tire cost, but also is not effective in cooling heat generated on a tire surface while driving the vehicle.

Therefore, the present disclosure is intended to solve the above-described problems of the prior art, and embodiments of the present disclosure provide a pneumatic tire implementing optimal installation of a resonance noise reduction member inside the tire.

### Technical Solution

To achieve the above object, a configuration of an embodiment provides a pneumatic tire including a tread portion 100, a sidewall portion 200, and a bead portion 300, wherein an inner liner layer 400 is installed inside the tire, and a plurality of resonance noise reduction members 500 are installed at equal intervals on the inner liner layer 400.

In an embodiment, a lower surface of each of the plurality of resonance noise reduction members 500 in contact with an inner surface of the tire may be characterized by being formed to have a larger area than an upper surface of the corresponding resonance noise reduction member 500.

In an embodiment, the width (w) of the resonance noise reduction member 500 may be 60 to 100% of a width (bw) of a tire belt 110, and a height (h) may be 30 to 90% of a sidewall height (sh).

In an embodiment, a lower length (d) of a cross-section of the resonance noise reduction member 500 may be 5 to 15 cm, and an upper length (d') may be 1 to 5 cm.

In an embodiment, a density of the resonance noise reduction member 500 may be 20 to 50 kg/ m³.

In an embodiment, a minimum distance minXn between the resonance noise reduction members 500 may be characterized by being defined as ((L-n*d)/n) - minXn ≤ 20 mm (where L is an inner circumference length of the tire, d is a lower length of a cross-section of each of the resonance noise reduction members, n is a number of blocks, and Xn is a distance between the resonance noise reduction members).

In an embodiment, a maximum distance maxXn between the resonance noise reduction members 500 may be characterized by being defined as maxXn - ((L-n*d)/n) ≤ 20 mm (where L is an inner circumference length of the tire, d is a lower length of a cross-section of each of the resonance noise reduction members, n is a number of blocks, and Xn is a distance between the resonance noise reduction members).

In an embodiment, 2 to 9 resonance noise reduction members 500 may be formed on the inner liner layer 400.

In an embodiment, the plurality of resonance noise reduction members 500 may be arranged radially to have an arrangement angle (θ) of 40° to 180° with respect to a central axis of the bead portion 300.

### Advantageous Effects

According to the above configuration, a resonance noise reduction effect of 93% compared to the prior art may be expected even when using only 30% of the total weight of the resonance noise reduction member.

Accordingly, lightening the tire is possible, and additional effects such as high fuel efficiency may be expected.

Effects of the present disclosure are not limited to the above-mentioned effects, and it should be understood to include all effects inferable from a configuration of the disclosure described in the detailed description or claims of the present disclosure.

### BRIEF DESCRIPTION OF THE DRAWINGS

FIG. 1 is a longitudinal cross-sectional view of a pneumatic tire according to an embodiment of the present disclosure.
FIG. 2 is a longitudinal cross-sectional view of an embodiment applying 6 resonance noise reduction members of the pneumatic tire of an embodiment.
FIG. 3 is a transverse cross-sectional view of the pneumatic tire of an embodiment.
FIG. 4 is a perspective view of an embodiment of the resonance noise reduction member of an embodiment.
FIGS. 5(a) and 5(b) are perspective views of another embodiment of the resonance noise reduction member of an embodiment.
FIGS. 6(a), 6(b), 6(c), and 6(d) are cross-sectional views showing cross-sections of various embodiments of the resonance noise reduction member of an embodiment.
FIGS. 7(a) and 7(b) to FIGS. 8(a) and 8(b) are perspective views of other embodiments of a shape of the resonance noise reduction member of an embodiment.
FIG. 9 is a table summarizing test results of an embodiment.
FIG. 10 is a graph evaluating noise according to frequency for the resonance noise reduction member of an embodiment and the prior art.

### Best Mode for Carrying Out the Invention

In a most preferred embodiment of the present disclosure, a pneumatic tire includes a tread portion 100, a sidewall portion 200, and a bead portion 300, wherein an inner liner layer 400 is installed inside the tire, and a plurality of resonance noise reduction members 500 are installed at equal intervals on the inner liner layer 400.

### Mode for Carrying Out the Invention

In describing the present disclosure below, if a detailed description of a related known function or configuration is determined to unnecessarily obscure the subject matter of the present disclosure, then the detailed description thereof will be omitted.

Since embodiments according to the concept of the present disclosure may undergo various modifications and have various forms, specific embodiments will be illustrated in the drawings and described in detail in the present specification or application. However, this is not intended to limit the embodiments according to the concept of the present disclosure to specific disclosed forms, and the present disclosure should be understood to include all modifications, equivalents, and substitutes included in the spirit and technical scope of the present disclosure.

If an element is referred to as being "connected" or "coupled" to another element, then it should be understood that the element may be directly connected or coupled to the other element, but another element may exist in between. On the other hand, if an element is referred to as being "directly connected" or "directly coupled" to another element, then it should be understood that no other element exists in between. Other expressions describing relationships between elements, that is, "between" and "directly between" or "adjacent to" and "directly adjacent to," should be interpreted similarly.

Terms used in the present specification are typically used to describe specific embodiments and are not intended to limit the present disclosure. Singular expressions include plural expressions unless the context clearly indicates otherwise. In the present specification, terms such as "include" or "have" are intended to designate presence of a described feature, number, operation, component, part, or a combination thereof, and should be understood as not precluding possibility of presence or addition of one or more other features, numbers, operations, components, parts, or combinations thereof.

Hereinafter, the present disclosure will be described in more detail with reference to the accompanying drawings illustrating embodiments of the present disclosure.

The term "upper surface of the resonance noise reduction member" used throughout the specification in the present disclosure refers to a surface in contact with air, the surface formed to be wider than the lower surface of the resonance noise reduction member.

Furthermore, the term "lower surface of the resonance noise reduction member" used throughout the specification in the present disclosure refers to a surface in contact with the inner surface of the tire, having a large contact area with the inside of the tire and being formed to be wider than the upper surface of the resonance noise reduction member.

An embodiment provides a configuration interfering with resonance noise formation by arranging block-shaped structures at intervals inside the tire. A wavelength of the tire resonance noise is similar to a circumferential length of a central portion of a space between the tire and the rim. This is because the tire continuously collides with the ground to apply an impact to the cavity inside the tire, and the cavity inside the tire acts as a wind instrument like a Danso to vibrate at the natural frequency of the cavity inside the tire.

The present disclosure serves to interfere with the resonance noise formation by placing a structure inside the tire, just as no sound (resonance noise) occurs when blowing air with a structure placed inside the Danso.

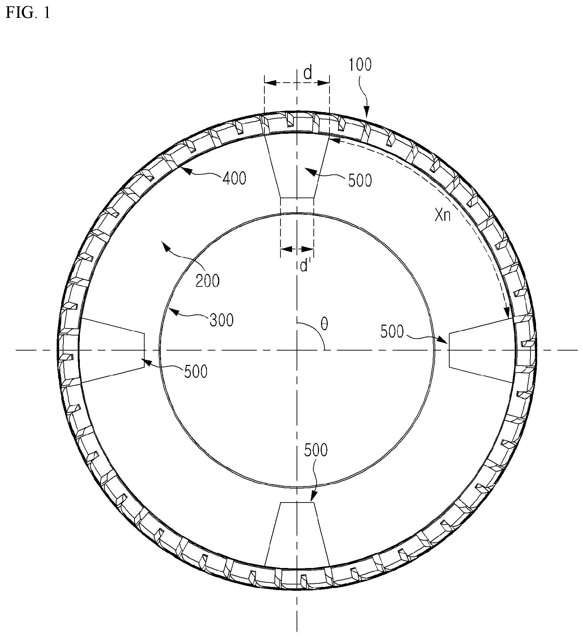

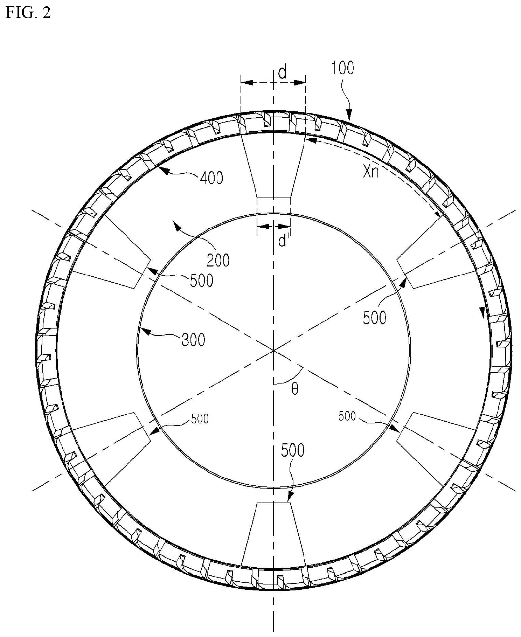

FIG. 1 is a longitudinal cross-sectional view of the pneumatic tire of an embodiment, and FIG. 2 is a longitudinal cross-sectional view of an embodiment applying 6 resonance noise reduction members of the pneumatic tire of an embodiment. As shown in FIGS. 1 and 2, an embodiment provides a pneumatic tire including a tread portion 100, a sidewall portion 200, and a bead portion 300, wherein an inner liner layer 400 is installed inside the tire, and a plurality of resonance noise reduction members 500 are installed at equal intervals on the inner liner layer 400.

The plurality of resonance noise reduction members 500 are arranged radially to have an arrangement angle θ of 40° to 180° with respect to a central axis of the bead portion 300.

In more detail, the arrangement angle θ between adjacent resonance noise reduction members 500 among the plurality of resonance noise reduction members 500 may be 40° to 180°, but is more preferably 51° to 90°.

Here, the arrangement angle θ is defined as an angle formed by the central axis of the bead portion 300 and the adjacent resonance noise reduction members 500.

Specifically, referring to FIGS. 1 and 2, 2 to 9 resonance noise reduction members 500 may be formed on the inner liner layer 400, but forming 4 to 7 resonance noise reduction members 500 on the inner liner layer 400 is more preferable.

Furthermore, the lower surface of the resonance noise reduction member 500 in contact with the inner surface of the tire is formed to have a larger area than the upper surface of the resonance noise reduction member 500.

In one embodiment, a cross-section of the resonance noise reduction member 500 may have a trapezoidal shape, but is not limited thereto.

However, a reason why each of the plurality of resonance noise reduction members 500 is a trapezoidal column is to minimize deformation because each of the plurality of resonance noise reduction members 500 receives a force in a direction opposite to an acceleration direction of the tire, and a resulting deformation may affect the resonance noise reduction effect.

If the plurality of resonance noise reduction members 500 are not evenly attached to the inner surface of the tire, then the dynamic balance of the tire may be distorted, causing an increase in rolling resistance (RRc) or inducing vibration in the vehicle, thereby causing inconvenience to the driver. To minimize this, an optimal attachment interval according to the following equation was experimentally derived.

That is, the minimum distance minXn between the resonance noise reduction members 500 preferably satisfies Equation 1 below.$\left.\left(L-n*d\right)/n\right) - minXn \leq 20 mm$ (where L is an inner circumference length of the tire, d is a lower length of a cross-section of each of the resonance noise reduction members, n is a number of blocks, and Xn is a distance between the resonance noise reduction members)

Furthermore, the maximum distance maxXn between the resonance noise reduction members 500 preferably satisfies Equation 2 below.$maxXn - \left(\left(L-n*d\right)/n\right) \leq 20 mm$ (where L is an inner circumference length of the tire, d is a lower length of a cross-section of each of the resonance noise reduction members, n is a number of blocks, and Xn is a distance between the resonance noise reduction members)

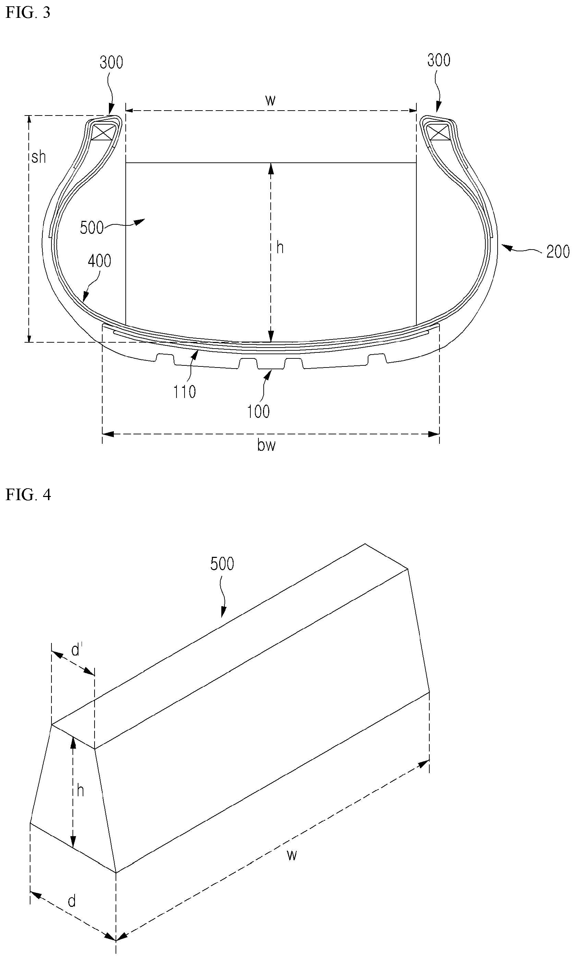

FIG. 3 is a transverse cross-sectional view of the pneumatic tire of an embodiment, and FIG. 4 is a perspective view of an embodiment of the resonance noise reduction member of an embodiment.

To effectively reduce the resonance noise generated inside the tire using a partition wall, selecting an appropriate size capable of performing a role of the partition wall is important. When viewing the tire cross-section, tests confirmed that if an area of 40% or more of an entire cross-sectional area is blocked by the partition wall, then the resonance noise is reduced. To satisfy this, the width of the resonance noise reduction member 500 is preferably 60 to 100% of a width of a tire belt.

Furthermore, the height of the resonance noise reduction member is suitably 30 to 90%, preferably 40 to 80% of a sidewall height.

Furthermore, to maintain a shape and attachment of the resonance noise reduction member 500 according to a driving direction of the tire, an upper length of each of the plurality of resonance noise reduction members 500 is suitably 1 to 5 cm, and a lower length is suitably 5 cm to 15 cm.

Referring to FIG. 4, an area of the lower surface (tire contact surface) of the resonance noise reduction member 500 is formed to be larger than an area of the upper surface (surface in contact with air) of the resonance noise reduction member 500.

That is, the resonance noise reduction member 500 may have a trapezoidal shape becoming narrower and inclined from the lower surface of the resonance noise reduction member 500 toward the upper surface thereof in a direction toward the central axis of the bead portion 300.

That is, as shown in FIGS. 3 and 4, the lower length d of the cross-section of the resonance noise reduction member 500 is preferably 5 to 15 cm, and the upper length d' is preferably 1 to 5 cm. The density of the resonance noise reduction member 500 is preferably 20 to 50 kg/ m³.

The above-described trapezoidal shape enables forming a stable structure, thereby preventing a problem of durability degradation due to fatigue caused by behavior of the resonance noise reduction member 500 in the driving direction, and an effect of preventing occurrence of residual vibration may be expected.

Furthermore, as described above, the width w of the resonance noise reduction member 500 is preferably 60 to 100% of the width bw of the tire belt 110, and the height h is preferably 40 to 80% of the sidewall height sh.

If the height and the width of the resonance noise reduction member 500 are excessively large, then there is a concern that residual vibration due to irregular behavior may occur while driving. Accordingly, the above numerical limitation is meaningful.

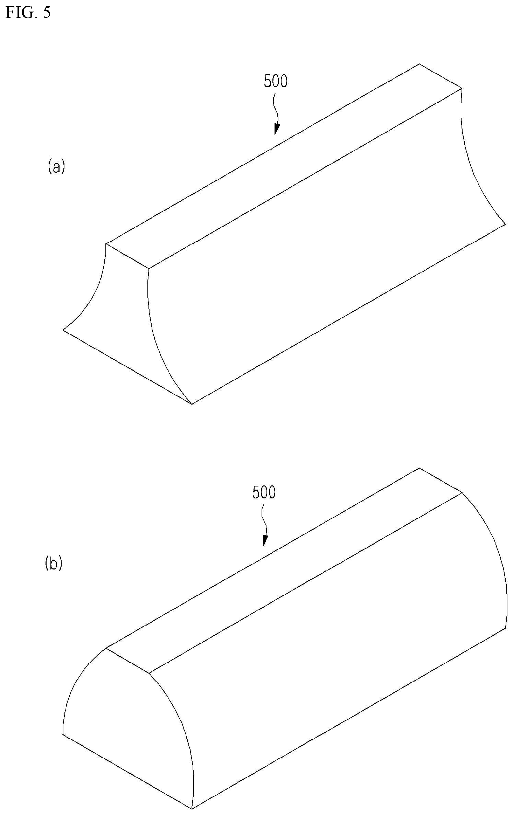

FIG. 5 is a perspective view of another embodiment of the resonance noise reduction member of an embodiment. FIG. 5(a) is an embodiment having a shape with left and right sides of the trapezoidal cross-section of the resonance noise reduction member 500 concave inward, and FIG. 5(b) is an embodiment having a shape with left and right sides of the trapezoidal cross-section of the resonance noise reduction member 500 concave outward.

In the resonance noise reduction member 500 according to another embodiment of an embodiment, mutually facing side surfaces of the resonance noise reduction member 500 may be concavely recessed inward as shown in FIG. 5(a), or mutually facing side surfaces of the resonance noise reduction member 500 may be convexly protruded outward as shown in FIG. 5(b).

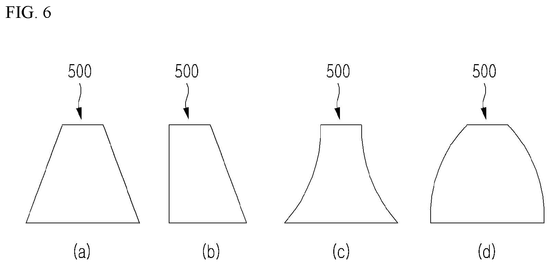

FIG. 6 is a cross-sectional view showing cross-sections of various embodiments of the resonance noise reduction member of an embodiment. FIG. 6(a) is a cross-sectional view of FIG. 4, FIG. 6(b) is a cross-sectional view of a modified example modified from FIG. 4, FIG. 6(c) is a cross-sectional view of FIG. 5(a), and FIG. 6(d) is a cross-sectional view of FIG. 5(b).

First, according to an embodiment, the resonance noise reduction member 500 is formed to be bilaterally symmetrical with respect to an imaginary central axis dividing the resonance noise reduction member 500 into left and right, as shown in FIG. 6(a).

Next, according to a modified example of an embodiment, the resonance noise reduction member 500 is formed to be bilaterally asymmetrical with respect to the imaginary central axis dividing the resonance noise reduction member 500 into left and right, as shown in FIG. 6(b).

Specifically, referring to FIG. 6(b), the lower surface of the resonance noise reduction member 500 and one side surface (the left side surface in FIG. 6(b)) of the resonance noise reduction member 500 form 90 degrees, whereas the lower surface of the resonance noise reduction member 500 and the other side surface (the right side surface in FIG. 6(b)) of the resonance noise reduction member 500 form an acute angle, so that the resonance noise reduction member 500 becomes bilaterally asymmetrical.

Next, according to another embodiment of an embodiment, the resonance noise reduction member 500 is formed to be bilaterally symmetrical with respect to the imaginary central axis dividing the resonance noise reduction member 500 into left and right, as shown in FIG. 6(c).

Next, according to still another embodiment of an embodiment, the resonance noise reduction member 500 is formed to be bilaterally symmetrical with respect to the imaginary central axis dividing the resonance noise reduction member 500 into left and right, as shown in FIG. 6(d).

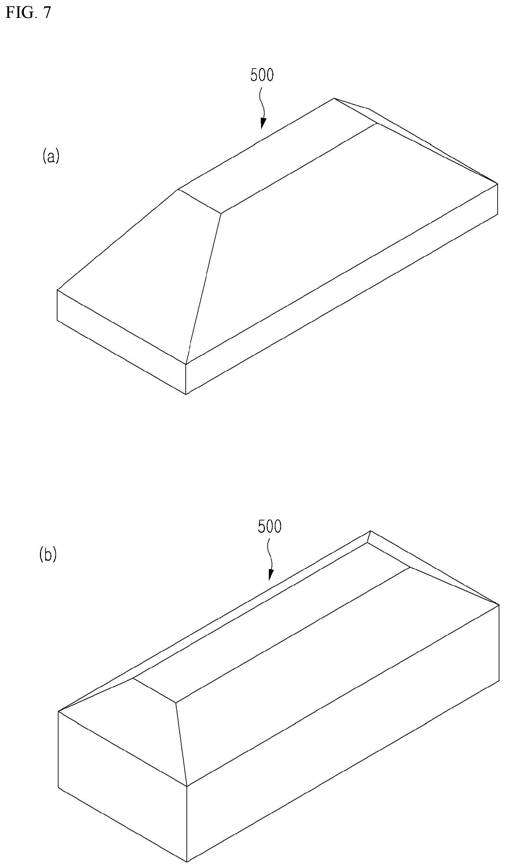

FIG. 7 is an embodiment having a bottom portion of the resonance noise reduction member 500 formed in a rectangular parallelepiped, FIG. 7(a) is an embodiment when a height of the rectangular parallelepiped portion is less than 1/2 of the height of the resonance noise reduction member 500, and FIG. 7(b) is an embodiment when the height of the rectangular parallelepiped portion is equal to or greater than 1/2 of the height of the resonance noise reduction member 500.

Referring to FIG. 7(a), the resonance noise reduction member 500 is formed such that the height of the rectangular parallelepiped portion located at the bottom portion is less than 1/2 of the height of the resonance noise reduction member 500.

Meanwhile, referring to FIG. 7(b), the resonance noise reduction member 500 is formed such that the height of the rectangular parallelepiped portion located at the bottom portion is equal to or greater than 1/2 of the height of the resonance noise reduction member 500.

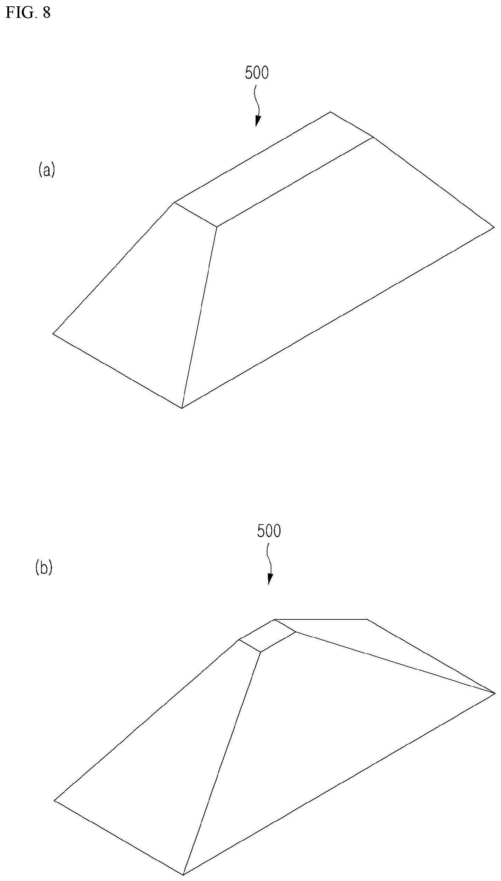

FIG. 8 is an embodiment in which a length of the upper surface of the resonance noise reduction member 500 is smaller than a length of the lower surface of the resonance noise reduction member 500, FIG. 8(a) is an embodiment in which the length of the upper surface of the resonance noise reduction member 500 is greater than 1/2 of the length or area of the lower surface of the resonance noise reduction member 500, and FIG. 8(b) is an embodiment in which the length of the upper surface of the resonance noise reduction member 500 is smaller than 1/2 of the length of the lower surface of the resonance noise reduction member 500.

Referring to FIG. 8(a), the resonance noise reduction member 500 is formed such that the length or area of the upper surface of the resonance noise reduction member 500 is greater than 1/2 of the length or area of the lower surface of the resonance noise reduction member 500.

Meanwhile, the resonance noise reduction member 500 is formed such that the length or area of the upper surface of the resonance noise reduction member 500 is smaller than 1/2 of the length or area of the lower surface of the resonance noise reduction member 500.

Shapes of the resonance noise reduction member of FIGS. 5, 7, and 8 may be selected in consideration of a material, weight, and sound absorption performance of the resonance noise reduction member.

### Embodiment

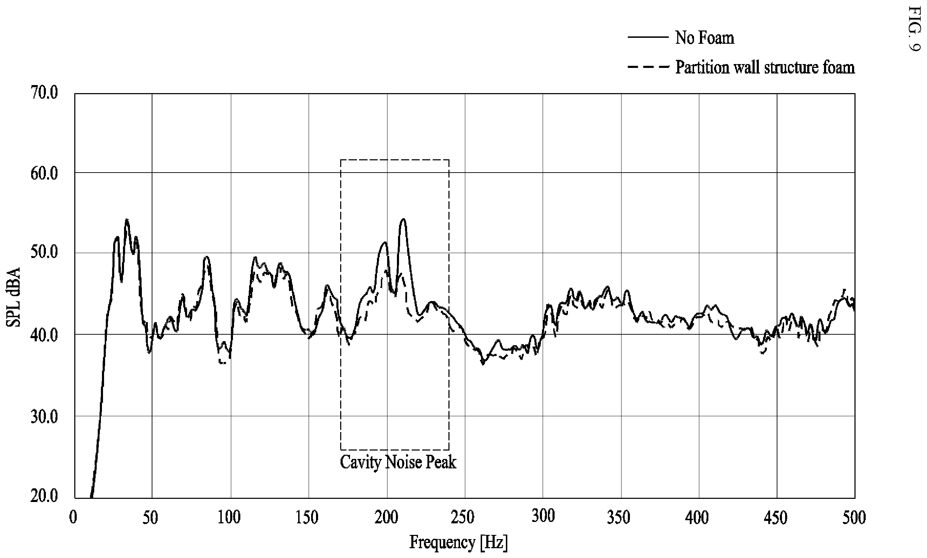

FIG. 9 is a table summarizing test results of an embodiment.

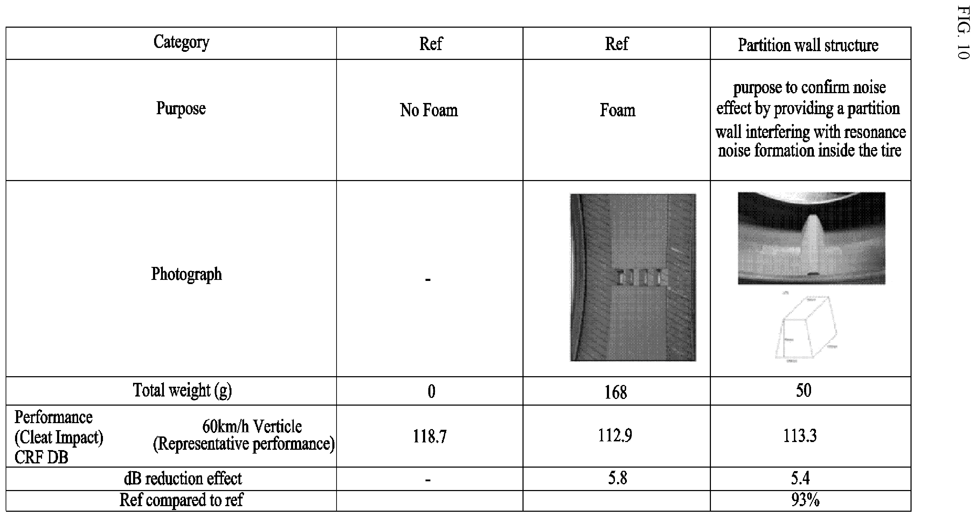

FIG. 10 is a graph evaluating noise according to frequency for the resonance noise reduction member of an embodiment and the prior art.

In FIGS. 9 and 10, an embodiment not applying a foam had no resonance noise reduction effect, and a conventional comparative example applying a foam had a reduction effect of 5.8 dB. In contrast, a technology of the partition wall structure of an embodiment recorded a resonance noise reduction effect of 5.4 dB.

That is, in an embodiment, test results confirmed that although merely a 30% level of foam weight was used compared to a Ref. Foam-used tire, the resonance noise dB reduction effect was 93% effective compared to the Foam-used tire.

The pneumatic tire installed with the resonance noise reduction member of the embodiment of the present disclosure having the above-described configuration may be applied to various vehicles such as a racing car, an electric vehicle, and a general vehicle.

Although the technical spirit of the present disclosure described above has been specifically described in a preferred embodiment, the embodiment should be noted to be for explanation and not for limitation thereof. Furthermore, those skilled in the art will understand that various embodiments are possible within the scope of the technical spirit of the present disclosure. Therefore, the true technical protection scope of the present disclosure should be determined by the technical spirit of the appended claims.

## Claims

1. A pneumatic tire comprising a tread portion 100, a sidewall portion 200, and a bead portion 300, wherein an inner liner layer 400 is installed inside the tire, and a plurality of resonance noise reduction members 500 are installed at equal intervals on the inner liner layer 400.

2. The pneumatic tire of claim 1, wherein upper surfaces of the plurality of resonance noise reduction members 500 in contact with an inner surface of the tire are formed to have a larger area than upper surfaces of the plurality of resonance noise reduction members 500.

3. The pneumatic tire of claim 1, wherein a width (w) of each of the plurality of resonance noise reduction members 500 is 60% to 100% of a width (bw) of a tire belt 110 of the pneumatic tire, and a height (h) of each of the plurality of resonance noise reduction members 500 is 30% to 90% of a height (sh) of the sidewall portion 200.

4. The pneumatic tire of claim 1, wherein a lower length (d) of a cross-section of each of the plurality of resonance noise reduction members 500 is 5 cm to 15 cm, and an upper length (d') is 1 cm to 5 cm.

5. The pneumatic tire of claim 1, wherein a density of each of the plurality of resonance noise reduction members 500 is 20 kg/m3 to 50 kg/ m³.

6. The pneumatic tire of claim 1, wherein a minimum distance minXn between the plurality of resonance noise reduction members 500 is defined as ((L-n*d)/n) - minXn ≤ 20 mm (where L is an inner circumference length of the tire, d is a lower length of a cross-section of each of the plurality of resonance noise reduction members, n is a number of blocks, and Xn is a distance between the plurality of resonance noise reduction members).

7. The pneumatic tire of claim 1, wherein a maximum distance maxXn between the plurality of resonance noise reduction members 500 is defined as maxXn - ((L-n*d)/n) ≤ 20 mm (where L is an inner circumference length of the tire, d is a lower length of a cross-section of each of the plurality of resonance noise reduction members, n is a number of blocks, and Xn is a distance between the plurality of resonance noise reduction members).

8. The pneumatic tire of claim 1, wherein a number of the plurality of resonance noise reduction members 500 formed on the inner liner layer 400 is 2 to 9.

9. The pneumatic tire of claim 1, wherein the plurality of resonance noise reduction members 500 are arranged radially to have an arrangement angle (θ) of 40° to 180° with respect to a central axis of the bead portion 300.
